# EUROPEAN PATENT APPLICATION

(11) **EP 2 846 245 A2**
(43) Date of publication of application: **11.03.2015**
(21) Application number: 14156654.7
(22) Date of filing: 25.02.2014
(51) Int. Cl.: G06F 3/0488, G06F 3/0482, G06F 3/0485

(54) **User terminal and control method thereof**

(30) Priority: 05.09.2013 KR 20130106728
(71) Applicant: Samsung Electronics Co., Ltd., Suwon-si, Gyeonggi-do 443-742 (KR)
(72) Inventor: Kim, Seok-hyun, Anyang-si, Gyeonggi-do (KR); Cho, Bong-hyun, Suwon-si, Gyeonggi-do (KR); Kim, Young-sun, Suwon-si, Gyeonggi-do (KR)
(74) Representative: Taor, Simon Edward William

(57) **Abstract**

Disclosed are a user terminal which includes: an image receptor to receive an image; an image processor to process the received image; a displayer to display the processed image; and a controller to display a graphical user interface (GUI) including at least one first item, to change a plurality of second items, not currently displayed, to be displayed on the GUI according to a user input, and to adjust at least one of size and display changing speed of at least one item of the displayed second items when the at least one item passes through a main display area.

## Description

Apparatuses and methods consistent with the exemplary embodiments relate to a user terminal and a control method thereof, and, more particularly, to a user terminal capable of preventing an excessive change of an item by a user input when changing to a user desired item and a control method thereof.

### Description of the Related Art

Smart equipment, including a smartphone, a smart TV, a tablet and a smart notebook, is widely used, which use may involve searching for lists and continuously searching through user inputs, such as touch inputs and inputs via a remote controller.

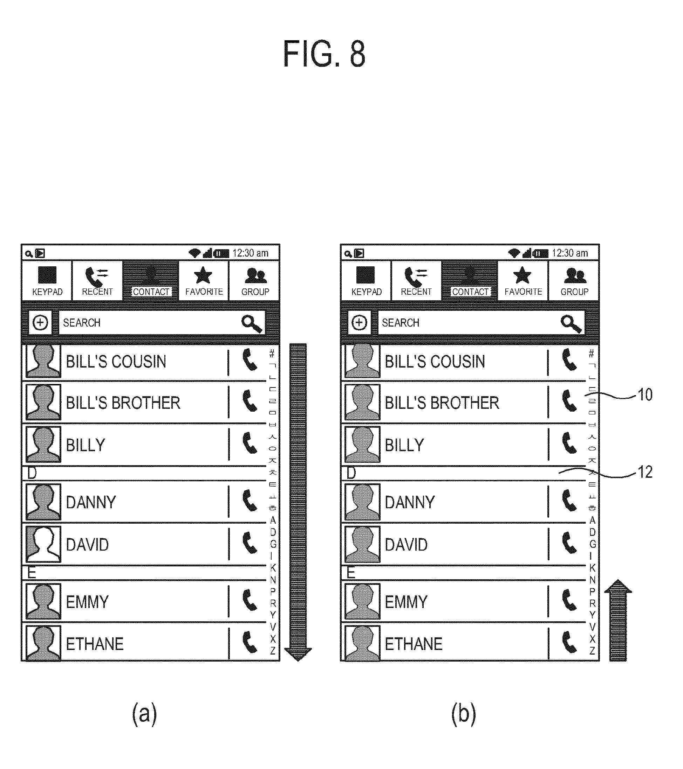

When a user makes a touch input to move to a desired item on a display, scrolling may be used along with the touch input. FIG. 8 illustrates an operation of a conventional user terminal, such as a smartphone. Referring to FIG. 8, when the user searches a list of menu items, such as a phonebook or an address book by scrolling, the user moves or traverses to an approximate location of a desired item by rough scrolling but does not reach the exact item, frequently missing the desired item, as shown in (a). In this case, as shown in (b), the user may have to conduct an additional adjusting operation of inverse scrolling to move or traverse to the desired item.

With an increasing number of scrolling times, the user may face inconvenience, and accordingly a method for the user to move to an exact desired item is needed.

What is needed is a display and system that makes it easier to see and reach or select a desired item.

An aspect of one or more exemplary embodiments is to provide a user terminal capable of adjusting size and changing traversal speed of an item to be necessarily recognized by a user among items changed and displayed by a user input when the item passes through a main display area, and a control method thereof.

The foregoing and/or other aspects may be achieved by providing a user terminal including: an image receptor to receive an image; an image processor to process the received image; a displayer to display the processed image; and a controller to display a graphical user interface (GUI) including at least one first item, to change a plurality of second items, not currently displayed, to be displayed on the GUI according to a user input, and to adjust at least one of size and changing speed (or speed at which the second items are displayed) of at least one item of the displayed second items when the at least one item passes through a main display area.

The controller may verify an index of the displayed second items and adjust a change of the displayed second items based on the index.

The controller may change the second items by a page according to a preset user input.

The controller may stop changing one page when the second items corresponding to the one page are disposed on a center of the main display area.

The controller may change one page according to the preset user input.

The controller may ignore an input via a remote controller that exceeds a preset value when a number of inputs via the remote controller with respect to changing speed of the GUI exceed the preset value when the user input is made via the remote controller.

When one highlight of the first item is moved by a user input via a remote controller, the controller may control the highlight to be moved with respect to a preset number of input times via the remote controller when a number of input times via the remote controller with respect to changing speed of the GUI is greater than the preset number.

The foregoing and/or other aspects may be achieved by providing a control method of a user terminal, the control method including: displaying a graphical user interface (GUI) including at least one first item; changing a plurality of second items, not currently displayed, to be displayed on the GUI according to a user input; determining whether at least one items of the displayed second items passes through a main display area; and adjusting at least one of size and display changing speed of the at least one item when the at least one item passes through the main display area.

The adjusting of the at least one may include verifying an index of the displayed second items and adjusting a change of the displayed second items based on the index.

The adjusting of the at least one may include changing the second items by a page according to a preset user input.

The changing of the second items may include stopping changing one page when the second items corresponding to the one page are disposed on a center of the main display area.

The changing of the second items may include changing one page according to the preset user input.

The changing of the second items to be displayed on the GUI may include ignoring an input via a remote controller that exceeds a preset value when a number of inputs via the remote controller with respect to changing speed of the GUI exceed the preset value when the user input is made via the remote controller.

The foregoing and/or other aspects may be achieved by providing a user terminal, including; a display, and a processor controlling a display on the display of a list of items and index indicators providing indices in the list, the list of items and indicators being controlled to move onto and off the display and when one of the indicators and items moves onto the display, one of page rate, movement speed and display size of the one of the indicators changes.

A display size of the indicator may change from a first size to a second different size as the indicator moves toward a center of the display and change from the second size to the first size as the indicator moves away from the center.

A display speed of the indicator may change from a first speed to a second different speed as the indicator moves toward a center of the display and change from the second speed to the first speed as the indicator moves away from the center.

A page rate may change from a first page rate to a second different page rate as the indicator moves onto the display and change from the second page rate to the first page rate as the indicator moves off the display.

A page display pauses when the page changes.

When a motion rate exceeds a threshold the motion may be set at a predetermined value associated with the threshold.

The index may be a boundary between groups of items.

The changing of the second items to be displayed on the GUI may include determining whether a number of input times via a remote controller with respect to changing speed of the GUI is greater than a preset number when one highlight of the first item is moved by a user input via a remote controller, and moving the highlight with respect to input times via the remote controller greater than the preset number when the number of input times is greater than the preset number.

As described above, according to one or more exemplary embodiments, when an item to be necessarily recognized by a user among items changed and displayed by a user input passes through a main display area, size and changing speed of the item may be adjusted, so that the user may prevent an excessive change of the item to reduce operation times and easily move to a desired item.

The foregoing and/or other aspects may be achieved by providing a user terminal, including a display and a processor controlling a display on the display of a list of items and index indicators providing indices in the list, the list of items and indicators being controlled to move onto and off the display and when one of the indicators and items moves onto the display, one of page rate, movement speed and display size of the one of the indicators changes.

The above and/or other aspects will become apparent and more readily appreciated from the following description of the exemplary embodiments, taken in conjunction with the accompanying drawings, in which:
FIG. 1 is a block diagram illustrating a configuration of a user terminal according to an exemplary embodiment.
FIG. 2 is a block diagram illustrating a configuration of a user terminal according to another exemplary embodiment.
FIG. 3 is a flowchart illustrating an operation of a user terminal according to an exemplary embodiment.
FIG. 4 is a flowchart illustrating an operation of a user terminal according to another exemplary embodiment.
FIGS. 5, 6 and 7 are flowcharts illustrating operations of a user terminal according to other exemplary embodiments.
FIG. 8 illustrates an operation of a conventional user terminal.
FIG. 9 illustrates enlarging an item on a user terminal according to an exemplary embodiment.
FIG. 10 illustrates reducing changing speed according to an item change on a user terminal according to an exemplary embodiment.
FIG. 11 illustrates a page change on a user terminal according to an exemplary embodiment.
FIG. 12 illustrates a main display area of a user terminal according to an exemplary embodiment.

Below, exemplary embodiments will be described in detail with reference to the accompanying drawings so as to be easily realized or understood by a person having ordinary knowledge or skill in the art. The exemplary embodiments may be embodied in various forms without being limited to the exemplary embodiments set forth herein. Descriptions of well-known parts are omitted for clarity and conciseness, and like reference numerals refer to like elements throughout.

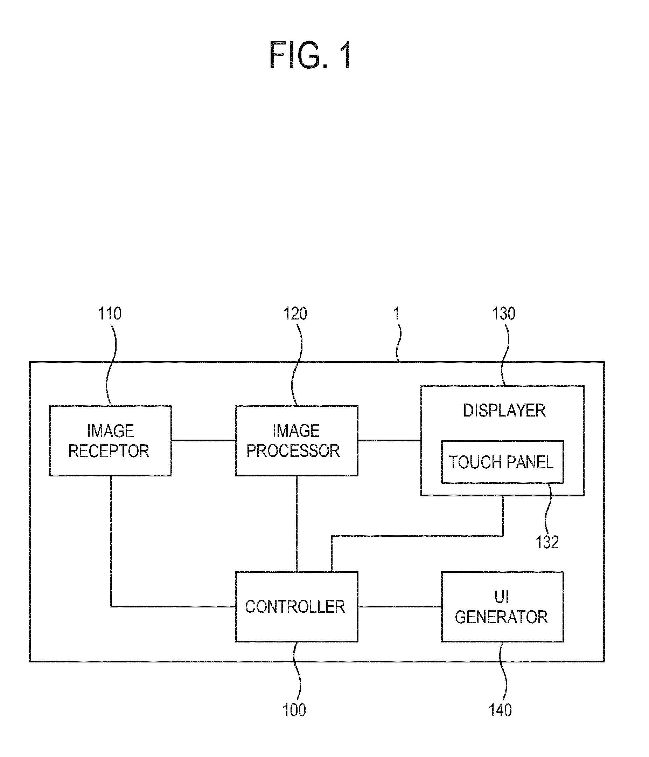

FIG. 1 is a block diagram illustrating a configuration of a user terminal 1 according to an exemplary embodiment. As shown in FIG. 1, the user terminal 1 according to the present embodiment may include an image receptor 110, an image processor 120, a displayer 130 including a touch panel 132, a user interface (UI) generator 140 and a controller 100. The user terminal 1 may include or be a smartphone, a tablet, a notebook and a smart TV. When a user input is made with a gesture type motion of a user, the user terminal 1 may also include a large-sized smart TV.

The image receptor 110 may receive an image signal or image data via a cable or wirelessly and transmit the image signal or image data to the image processor 120. The image receptor 110 may receive a broadcast signal from a broadcast signal transmission unit (not shown), such as a TV broadcast signal, as an image signal, receive an image signal from an imaging device, such as a DVD player and a BD player, receive an image signal from a PC, receive an image signal from mobile equipment, such as a smartphone and a smart pad, receive an image signal through a network, such as the Internet, or receive image content stored in a storage medium, such as a USB storage medium, as an image signal. Alternatively, an image signal may be stored in a storage unit (not shown) and provided, instead of being received via the receptor. The image receptor 110 may be configured as various types based on standards of received image signals and configurations of the user terminal 1. For example, the image receptor 110 may receive a radio frequency (RF) signal or image signals in accordance with composite video, component video, super video, SCART, high definition multimedia interface (HDMI), DisplayPort, unified display interface (UDI) or wireless HD standards. When the image signal is a broadcast signal, the image receptor 110 includes a tuner to tune the broadcast signal for each channel.

The image processor 120, such as may be implemented via a computer, may perform any kind of image processing, without embodiments of the invention being limited to, for example, decoding corresponding to an image format of image data, deinterlacing to convert interlaced image data into a progressive form, scaling to adjust image data to a preset resolution, noise reduction to improve image quality, detail enhancement, frame refresh rate conversion, or the like.

The image processor 120 may be provided as an image processing board (not shown) formed by mounting an integrated multi-functional component, such as a system on chip (SOC), or separate components to independently conduct individual processes on a printed circuit board and be embedded in the user terminal 1.

The image processor 120 performs a variety of preset image processing processes on a broadcast signal including an image signal received from the image receptor 110 and a source image including an image signal provided from an image source (not shown). The image processor 120 outputs the processed image signals to the user terminal 1, thereby displaying the source image on the user terminal 1.

The displayer 130 displays an image based on an image signal output from the image processor 120. The displayer or display 130 may be configured in various display modes using liquid crystals, plasma, light emitting diodes, organic light emitting diodes, a surface conduction electron emitter, a carbon nano-tube, nano-crystals, or the like.

The displayer 130 may further include an additional component depending on a display mode thereof. For example, in a display mode using liquid crystals, the displayer 130 includes a liquid crystal display (LCD) panel, a backlight unit (not shown) to provide light to the panel and a panel driving board (not shown) to drive the panel.

The displayer 130 displays an image based on an image signal processed by the image processor 120. The displayer 130 may display the image in any method including an LCD, a PDP and an OLED. In this instance, the displayer 130 may include an LCD panel, a PDP and an OLED panel. The displayer 130 may include the touch panel 132 to receive a user input.

The UI generator 140 may generate a UI (User Interface) for operating an application program being executed. The generated UI may include a plurality of sub-UIs provided in a form of an icon or text. When a user selects a particular sub-UI through the user terminal, an application program may operate corresponding to the selected sub-UI. That is, each sub-UI may be generated by a plurality of functions or an event to operate an application program being executed on the user terminal.

The UI generator 140 denotes a software or hardware function of generating and controlling a UI displayed on the displayer 130, which may be implemented by the controller 100. That is, the UI generator 140 may not be configured as a separate chipset or separate microprocessor.

The controller 100 may display a graphical user interface (GUI) including at least one first item, change a plurality of second items 10 (see FIG. 8), not currently displayed, to be displayed on the GUI according to a user input, and adjust at least one of size and changing or traversal speed of at least one item of the displayed second items 10 when the at least one item passes through a main display area.

Here, the main display area is a region that the user may pay attention to when watching a screen of the user terminal, for example, a predetermined range of a central area of the screen. Thus, an item may be easily recognized in the main display area. The range of the main display area may have any size, without embodiments of the invention being limited to a particular size.

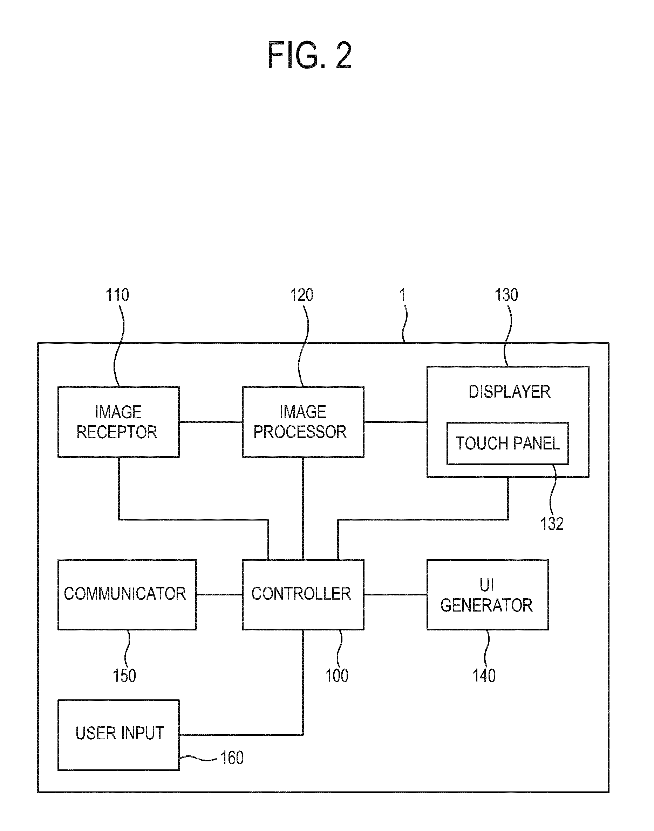

FIG. 2 is a block diagram illustrating a configuration of a user terminal 1 according to another exemplary embodiment. As shown in FIG. 2, the user terminal 1 according to the present embodiment may include the components shown in FIG. 1 and further include a communicator 150 and a user input 160.

The communicator 150 may receive a signal resulting from an external input and transmit the signal to the image processor 120 or the controller 100. The communication 150 may be connected with various external input cables to receive signals by corresponding external inputs via the cables or receive a signal transmitted wirelessly in accordance with a predetermined wireless communication standard.

The communicator 150 may include a plurality of connectors (not shown) separately connected to the respective cables. The communicator 150 may receive a signal from a connected external input, for example, a broadcast signal, an image signal and a data signal in accordance with HDMI, USB and component standards, or communication data through a communication network.

The communicator 150 may further include various additional components, such as a wireless communication module (not shown) for wireless communications and a tuner (not shown) to tune a broadcast signal, depending on a design of the user terminal 1 in addition to a component to receive a signal/data. The communicator 150 may not only receive a signal from an external device but transmit information/data/signals of an image processing apparatus to the external device. That is, the communicator 150 of embodiments of the invention is not limited to a configuration for receiving a signal from the external device but may be provided as an interface enabling two-way communications. The communicator 150 may receive a control signal for selecting a UI from a plurality of control units. The communicator 150 may be configured as a known communication module for short-range wireless communications, such as Bluetooth, Infrared (IR), Ultra Wideband (UWB) and Zigbee, or as a known communication port. The communicator 150 may also serve to transmit and receive an instruction to manipulate a display and data in addition to the control signal for selecting the UI.

The user input 160 transmits various preset control commands or information to the controller 100 based on a user manipulation or input. The user input 160 may be configured as a menu key and an input panel installed on an outside of the user terminal 1 or as a remote controller separate from the user terminal 1. Alternatively, the user input 160 may be provided as a single unit along with the displayer 130. When the displayer 130 is a touch screen, the user may touch an input menu (not shown) displayed on the displayer 130 to transmit a preset command to the controller 100.

The user input 160 may receive a user motion. The user motion includes a touch input. The user input 160 may directly receive the user motion or receive information on the user motion from the external device.

The controller 100 may verify an index 12 of the second items 10 changed and displayed by the user input and adjust a change of the second items 10 displayed based on the verified index 12. For example, in a telephone list, an item representing a Korean consonant or an English alphabet may be the index 12 (see FIG. 8). In this instance, when items arranged in order are changed by a user input and the index 12 representing the Korean consonant or English alphabet passes through the main display area, the index 12 may be enlarged or changed in size slowly so that the user clearly recognizes the index 12. Accordingly, the user may prevent the index 12 from excessively changing.

The controller 100 may change the second items 10 by a page at a time according to a preset user input. When the user input is made, the controller 100 changes the second items 10 by a page at a time. Changing by a page at a time may change the second items 10 with respect to the same user input relatively faster than changing not by a page at a time but by item scrolling.

When the second items 10 on one page are disposed on a center of the main display area, the controller 100 may stop the page changing for a predetermined time. As described above, changing by a page at a time may enable a plurality of items to be changed fast, while changing by a page at a time may be stopped temporarily for the preset time before turning over the page so that the user may see the second items 10 in detail.

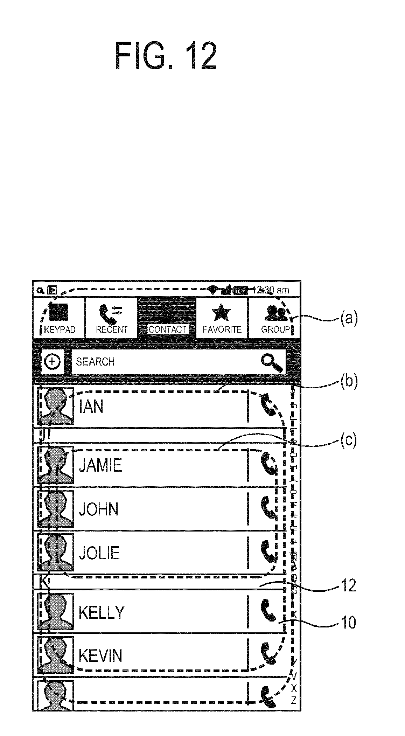

FIG. 12 illustrates a main display area of the user terminal according to an exemplary embodiment. Here, the main display area may be an entire region of the displayer of the user terminal. Further, the main display area is a region that the user may pay attention to when watching a screen of the user terminal, for example, a predetermined range of a central area of the screen. Thus, an item may be easily recognized in the main display area. The range of the main display area may have any size, without embodiments of the invention being limited to a particular size. The main display area may be a predetermined range of the central area or located at the center of the screen of the displayer. The user mostly looks at the main display area while retrieving and selecting an item using the user terminal. Thus, when the user terminal is small enough for the user to see the entire screen, an area of the entire screen may be the main display area. When the user terminal is not small enough for the user to see the entire screen, a predetermined range of a central area located at the center of the screen the user sees may be the main display area.

The main display area may be set by the user or set in advance by a manufacturer based on size of the user terminal.

The controller 100 may turn one page according to a predetermined user input. When the second items 10 are displayed within one page, it may be difficult for the user to closely or easily see the second items 10 despite a stop for the predetermined time. Thus, the controller 100 may turn only a single page. For example, when turning is carried out by a touch with two fingers, a setting may be made to turn only one page.

When a user motion input is made via the remote controller, the controller 100 may ignore a number inputs via the remote controller that exceeds a preset value when the number of inputs via the remote controller with respect to changing speed of the GUI exceeds the preset value. To change the GUI through an input via a direction key of the remote controller, the user may input or activate the direction key in an amount greater than the changing speed of the GUI. In this case, when the number of input times via the remote controller is greater than a preset value, the controller 100 ignores inputs via the remote controller that exceeds the preset value so that the user may recognize the change of the GUI.

When one highlight of the first item is moved by a user input via the remote controller, the controller 100 may control the highlight to be moved with respect to a preset number of input times via the remote controller when the number of input times via the remote controller with respect to the changing speed of the GUI is greater than a preset value. When it is determined that user inputs via the direction key of the remote controller are made greater times in a number than the number of times the highlight is moved, for example, when the highlight is moved by three sections to the right while inputs via the direction key of the remote controller occur six times, which means that inputs excessively occur (exceed the motion) by three times, the controller 100 may control the highlight to be moved by one section to the right when inputs via the remote controller are made three times or more. If inputs via the remote controller continue, the highlight may be abruptly moved to the right and displayed when an input via the remote controller stops. In this case, the user may miss a highlighted item and thus need to go back to the left to verify the highlighted item.

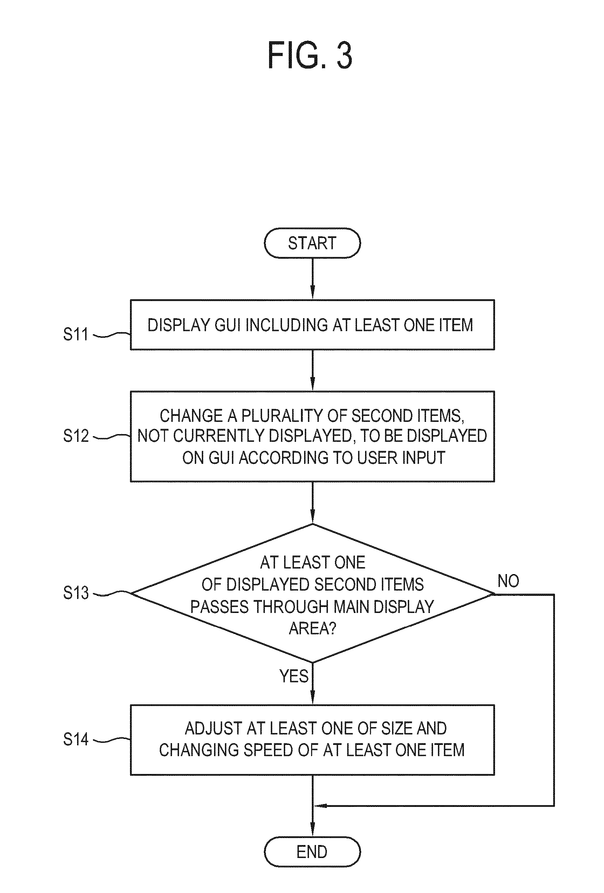

FIG. 3 is a flowchart illustrating an operation of the user terminal 1 according to an exemplary embodiment.

A GUI including at least one first item is displayed (S11).

A plurality of second items 10 (see FIG. 8), not currently displayed, is changed to be displayed on the GUI according to a user input (S12), such as moving onto the display itme by item or page by page.

It is determined whether at least one of the displayed second items 10, such as an index indicator, passes through a main display area (S13).

When it is determined that the at least one item does not pass through the main display area, the second items 10 are displayed on the GUI to be changed.

When it is determined that the at least one second item passes through the main display area, at least one of size and changing speed, such as traversal speed, or the speed at which the display changes of the at least one second item is adjusted (S14).

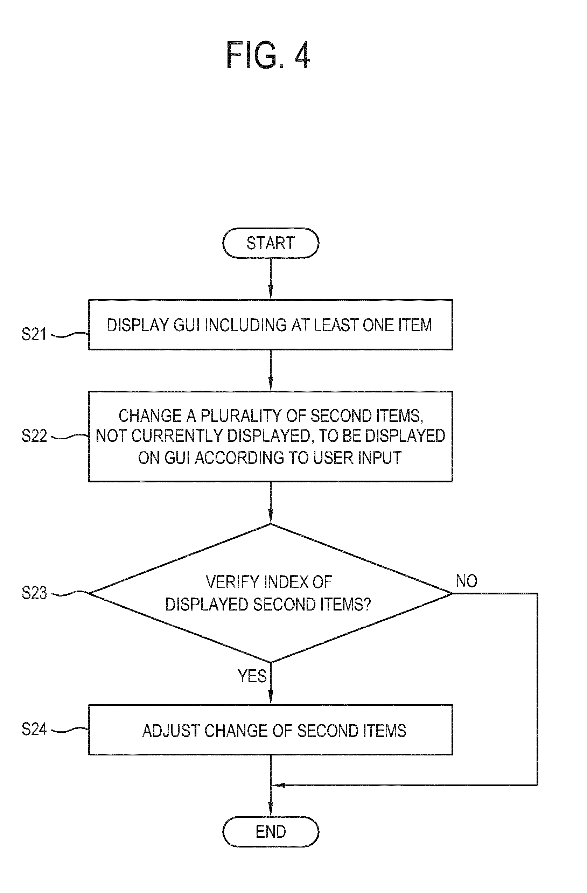

FIG. 4 is a flowchart illustrating an operation of the user terminal 1 according to another exemplary embodiment.

A GUI including at least one first item is displayed (S21).

A plurality of second items 10, not currently displayed, is changed to be displayed on the GUI according to a user input (S22).

It is determined whether an index of the displayed second items 10 passes through a main display area (S23).

When it is determined that the index 12 does not pass through the main display area, the second items 10 are displayed on the GUI to be changed.

When it is determined that the index 12 passes through the main display area, a change of the displayed second items 10 is adjusted based on the index 12 (S24). At least one of a display size and changing speed of the index 12 (or speed at which the display changes) may be adjusted. For example, to search for a telephone number, the index 12 (see FIG. 8) representing a Korean consonant or English alphabet may be enlarged so that the user more easily recognizes the index 12. Further, when the index 12 representing the Korean consonant or English alphabet passes by the main display area, the changing speed of the index 12 may be reduced so that the user more easily recognizes the index 12. Also, both the size of the index 12 may be enlarged and the changing speed of the index 12 may be reduced so that the user clearly recognizes the index 12.

Alternatively, when the user changes between channel items of all channels in retrieving all broadcast channels with the remote controller, a highlight used to indicate position may be moved in a changing direction. The channel items may have a boundary to divide regions thereof. When the boundary, such as the index 12, passes through the main display area, a display size of an adjacent channel item may be enlarged instead of the size of the index 12. Further, when the boundary between the channel items as the index 12 passes through the main display region, moving speed of the highlight may be reduced. Also, the size of the adjacent channel item may be enlarged simultaneously with reducing the moving speed of the highlight.

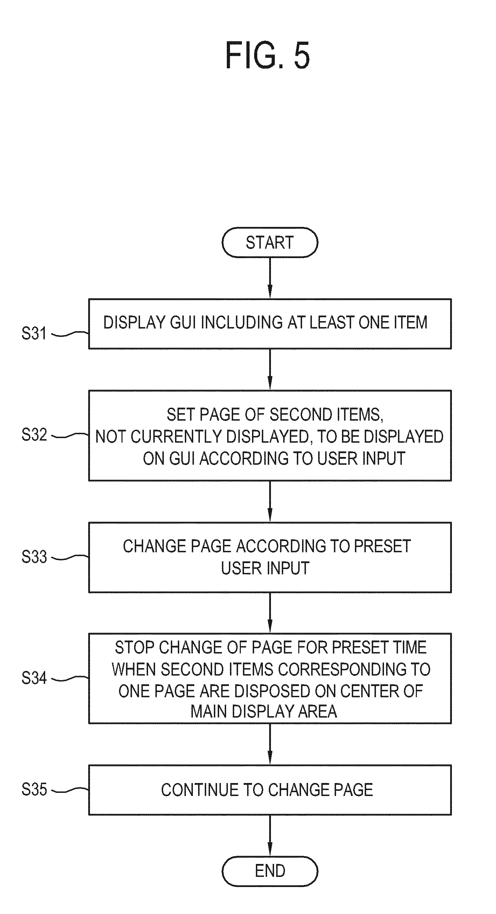

FIG. 5 is a flowchart illustrating an operation of the user terminal 1 according to still another exemplary embodiment.

A GUI including at least one first item is displayed (S31).

A page with respect to a plurality of second items 10 that is not currently displayed but can be displayed on the GUI is set according to a user input (S32). A range of the page may be set according to a user setting, in which the second items 20 displayable on the GUI may be set as one page.

The page is turned according to a preset user input (S33).

When the second items 10 within one page are disposed on a center of a main display area, turning the page is stopped for a predetermined time (S34). When turning the page is conducted by a page, the user may have difficulty in recognizing the second items. Thus, when one page is turned, turning the page is stopped or pauses for one to two seconds so that the user recognizes the second items. After one to two seconds, turning the page by a page is resumed (S35).

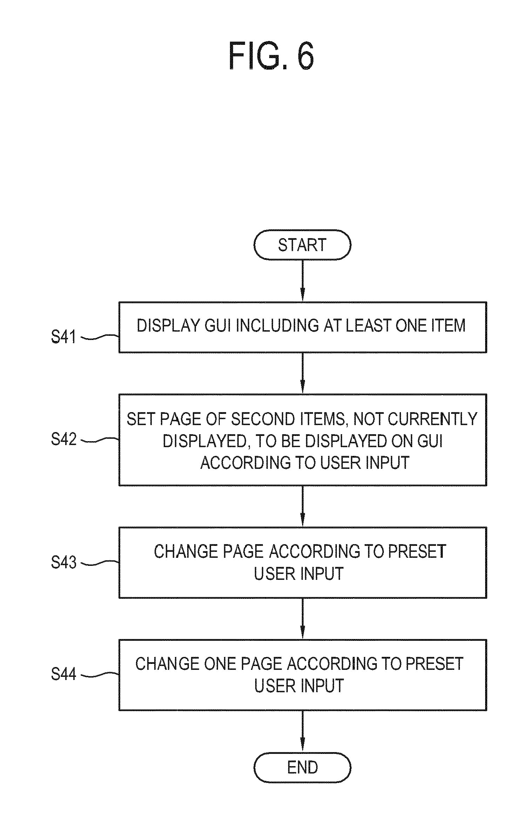

FIG. 6 is a flowchart illustrating an operation of the user terminal 1 according to yet another exemplary embodiment.

A GUI including at least one first item is displayed (S41).

A page with respect to a plurality of second items 10 that is not currently displayed but can be displayed on the GUI is set according to a user input (S42). A range of the page may be set according to a user setting, in which the second items 20 displayable on the GUI may be set as one page.

The page is turned according to a preset user input (S43).

Turning one page is conducted according to a preset user input (S44). For example, when the user input is made by the user touching and scrolling with two fingers, only one page may be turned or page rate is set at one per touch. In this case, only one page may be turned regardless of strength of the user scrolling.

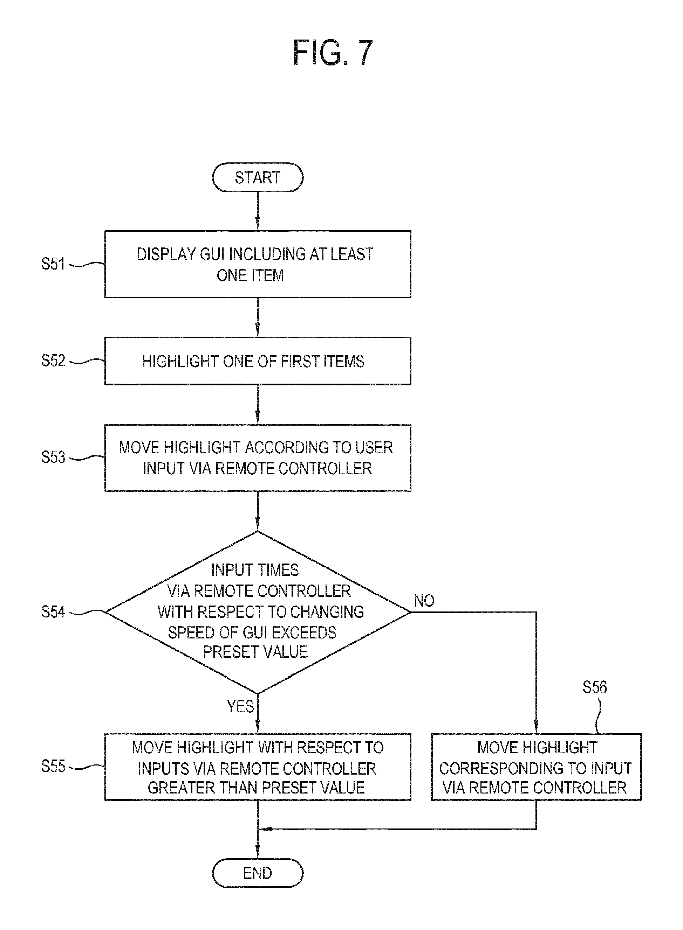

FIG. 7 is a flowchart illustrating an operation of the user terminal 1 according to still another exemplary embodiment.

A GUI including at least one first item is displayed (S51).

One of the first items currently displayed is highlighted according to a user input (S52).

The highlight is moved according to a user input via the remote controller (S53).

It is determined whether a number of inputs via the remote controller with respect to chaning speed of the GUI exceeds a preset value (S54).

When the number of inputs via the remote controller is the preset value or fewer, the highlight is moved corresponding to an input via the remote controller (S56).

When the number of inputs via the remote controller exceeds the preset value, the highlight is moved with respect to inputs via the remote controller made more than the preset value times (S55).

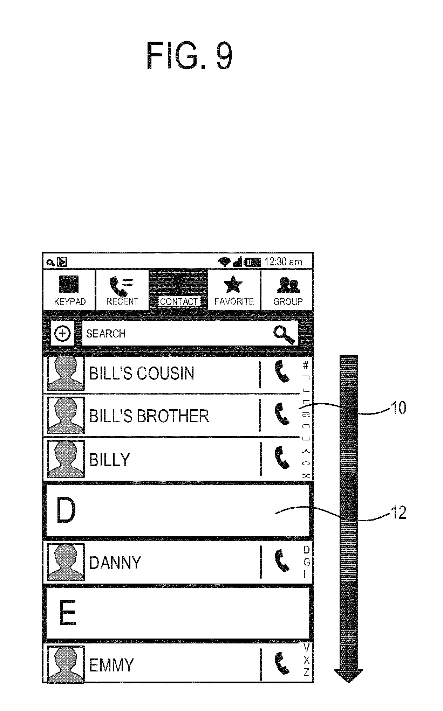

FIG. 9 illustrates enlarging an item on the user terminal 1 according to an exemplary embodiment.

FIG. 9 shows that as an item "D" is determined to pass through a main display area while the second items 10 are changing on display, the item "D" is displayed larger than the second items 10. The enlarged item is displayed while changing the second items so that the user may easily recognize the item and stop a desired section via a touch, not missing the desired section due to the item.

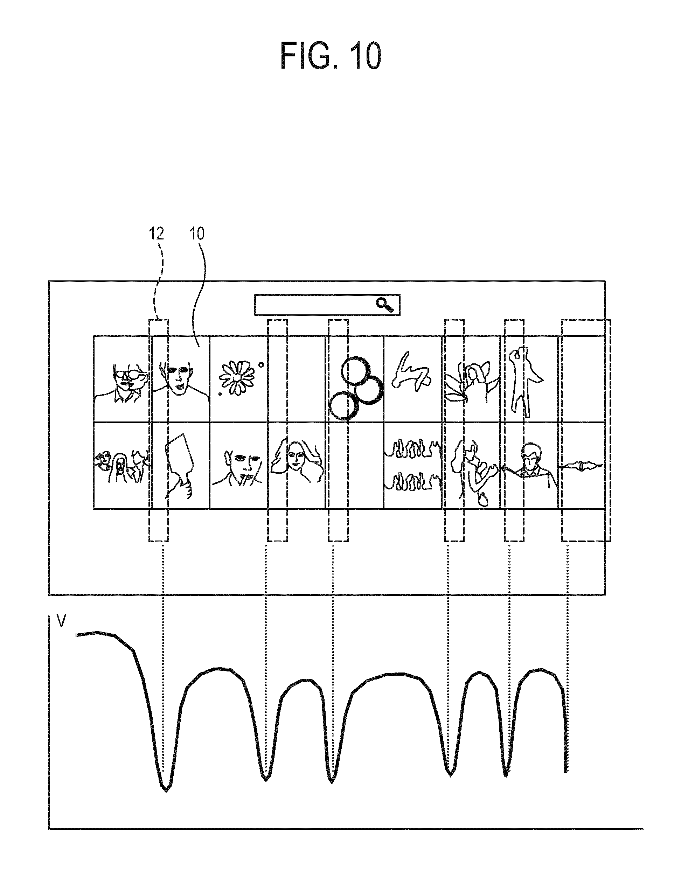

FIG. 10 illustrates reducing changing speed or velocity V according to an item change on the user terminal 1 according to an exemplary embodiment.

A plurality of second items 10 is displayed and changes from the right to the left according to a user input. For instance, the second items 10 are broadcast channel items. Here, when a boundary between channel items is determined to pass through the main display area while the channel items are changing, changing speed of the second items is reduced so that the user may easily recognize the second items. In particular, if a highlighted item is long, the user may possibly not recognize and miss the entire long item, in which case the user may have inconvenience in needing to return to the item. Thus, the changing speed of the items is reduced so that the user easily recognize the changing items, thereby preventing the items from excessively changing due to a fast change of the screen.

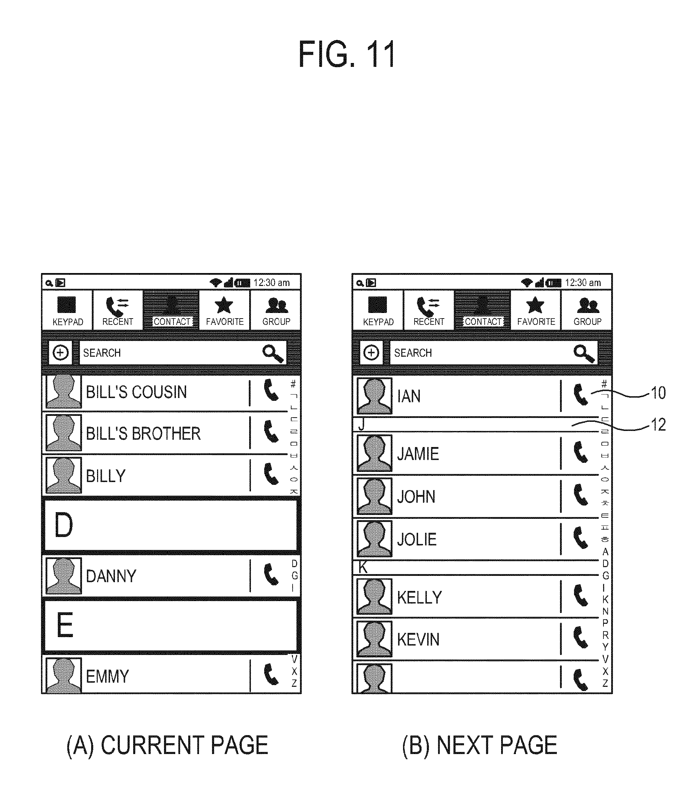

FIG. 11 illustrates a page change on the user terminal 1 according to an exemplary embodiment.

FIG. 11 shows a current page (a) and a next page (b). A page change is carried out from the current page (a) to the next page (b) according to a user input.

The current page (a) may be displayed by changing pages, unlike setting a screen displayed on a GUI as one page and sequentially changing a plurality of second items 10.

Here, as illustrated on the current page (a), when an index 12 passes through a main display area, the index 12 may be enlarged on display.

While changing the pages, changing speed of the pages may be adjusted and the index 12 may be enlarged.

The index 12 may be a boundary to divide items, an item or an index representing grouped items. The index 12 may be an edge of a page and be set as any one of a display, region and item of the second items 10.

The foregoing user terminal 1 may prevent an excessive change of items by a user input. Also, the user terminal 1 enables the user to easily change to a desired item by reducing a number of operations resulting from return due to an excessive change.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on non-transitory computer-readable media comprising computer-readable recording media. The program/software implementing the embodiments may also be transmitted over transmission communication media. Examples of the non-transitory computer-readable recording media include a magnetic recording apparatus, an optical disk, a magnetooptical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW. An example of communication media includes a carrier-wave signal.

Although a few exemplary embodiments have been shown and described, it will be appreciated by those skilled in the art that changes may be made in these exemplary embodiments without departing from the principles of the embodiments, the scope of which is defined in the appended claims and their equivalents.

## Claims

1. A user terminal, comprising:
an image receptor arranged to receive an image;
an image processor arranged to process the received image;
a displayer arranged to display the processed image; and
a controller arranged to display a graphical user interface (GUI) including at least one first item, to change a plurality of second items, not currently displayed, to be displayed on the GUI according to a user input, and to adjust at least one of size and display changing speed of at least one item of the displayed second items when the at least one item passes through a main display area.

2. The user terminal of claim 1, wherein the controller is arranged to verify an index of the displayed second items as being displayed and adjusts a change ration of the displayed second items based on the index.

3. The user terminal of claim 1 or 2, wherein the controller is arranged to change the second items by a page rate according to a preset user input.

4. The user terminal of claim 3, wherein the controller is arranged to stop changing pages when the second items corresponding to the one page are disposed at a center of the main display area.

5. The user terminal of claim 3 or 4, wherein the controller is arranged to change one page per touch according to the preset user input.

6. The user terminal of one of claim 1 to 5, wherein the controller is arranged to ignore an input via a remote controller that exceeds a preset value when a number of inputs via the remote controller with respect to changing speed of the GUI exceeds the preset value as a user input is made via the remote controller.

7. The user terminal of one of claim 1 to 6, wherein when one highlight of the first item is moved by a user input via a remote controller, the controller is arranged to control the highlight movement with respect to a preset number of input times via the remote controller when a number of input times via the remote controller with respect to changing speed of the GUI is greater than the preset number.

8. The user terminal of one of claim 1 to 7, wherein a display size of the indicator is arranged to change from a first size to a second different size as the indicator moves toward a center of the display and changes from the second size to the first size as the indicator moves away from the center.

9. A control method of a user terminal, the control method comprising:
displaying a graphical user interface (GUI) including at least one first item;
changing a plurality of second items, not currently displayed, to be displayed on the GUI according to a user input;
determining whether at least one item of the displayed second items passes through a main display area; and
adjusting at least one of size and display changing speed of the at least one item when the at least one item passes through the main display area.

10. The control method of claim 9, wherein the adjusting of the at least one item comprises verifying an index of the displayed second items and adjusting a change of the displayed second items based on the index.

11. The control method of claim 9 or 10, wherein the adjusting of the at least one item comprises changing the second items by a page at a time according to a preset user input.

12. The control method of claim 11, wherein the changing of the second items comprises stopping changing of pages when the second items corresponding to the one page are disposed at a center of the main display area.

13. The control method of claim 11 or 12, wherein the changing of the second items comprises changing one page per touch according to the preset user input.

14. The control method of one of claim 9 to 13, wherein the changing of the second items to be displayed on the GUI comprises ignoring an input via a remote controller that exceeds a preset value when a number of inputs via the remote controller with respect to changing speed of the GUI exceeds the preset value when a user input is made via the remote controller.

15. The control method of one of claim 9 to 14, wherein the changing of the second items to be displayed on the GUI comprises determining whether a number of input times via a remote controller with respect to changing speed of the GUI is greater than a preset number as one highlight of the first item is moved by a user input via a remote controller, and moving the highlight with respect to input times via the remote controller greater than the preset number when the number of input times is greater than the preset number.
